(19) Europäisches Patentamt
European Patent Office
Office européen des brevets

(11) **EP 2 412 580 B1**

(12) **FASCICULE DE BREVET EUROPEEN**

(45) Date de publication et mention
de la délivrance du brevet:
**10.05.2017   Bulletin 2017/19**

(51) Int Cl.:
**B60R 16/033** *(2006.01)*      **B60L 11/18** *(2006.01)*
**H02J 1/14** *(2006.01)*

(21) Numéro de dépôt: **11174912.3**

(22) Date de dépôt: **21.07.2011**

(54) **Procédé de commande pour projecteur de véhicule**

Steuerverfahren für Kraftfahrzeugscheinwerfer

Procedure for controlling vehicle headlights

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **26.07.2010   FR 1056083**

(43) Date de publication de la demande:
**01.02.2012   Bulletin 2012/05**

(73) Titulaire: **VALEO VISION**
**93012 Bobigny (FR)**

(72) Inventeurs:
• **Albou, Pierre**
**75013 PARIS (FR)**
• **Grimm, Martin**
**61440 OBERURSEL (DE)**

(56) Documents cités:
**DE-A1- 4 344 369          DE-A1-102004 021 998
DE-A1-102005 024 403**

**EP 2 412 580 B1**

**Description**

La présente Invention porte sur un procédé de commande d'au moins un organe d'un véhicule.

Une application préférée de l'invention est le domaine de l'équipement automobile avec en particulier l'adaptation du fonctionnement du véhicule à son contexte de circulation. L'invention peut ainsi être employée pour adapter le flux lumineux de projecteurs. Le flux lumineux est généralement défini comme la grandeur qui correspond à la puissance lumineuse émise par une source. Il est exprimé en lumen (lm), Les véhicules concernés peuvent être de tous types et l'Invention s'adresse notamment à ceux dont les moyens moteurs fonctionnent au moins en partie à l'énergie électrique.

Dans ce dernier cas, l'autonomie, c'est-à-dire la distance que peut parcourir le véhicule sans nécessiter un réapprovisionnement en énergie, est un paramètre particulièrement important quant bien même les récentes améliorations apportées aux batteries l'ont accrue. Une crainte légitime du conducteur est de tomber en panne ou de ne pouvoir rejoindre la destination géographique qu'il s'était fixé.

Les techniques actuelles offrent essentiellement au conducteur la possibilité d'obtenir des Informations chiffrées sur l'autonomie du véhicule. L'utilisateur est alors simplement laissé libre de réagir à ces données.

Par exemple, le document DE 10 2004 021998 décrit un système de distribution électrique pour un véhicule automobile.

La présente invention vise à remédier à ces limitations et à offrir de nouvelles possibilités de contrôle du fonctionnement du véhicule en fonction de l'autonomie.

A cette effet, on prévoit selon l'invention un procédé de commande d'au moins un organe d'un véhicule automobile pourvu de moyens de stockage d'énergie le procédé comportant les étapes suivantes :

- détermination d'une valeur de réserve en énergie du véhicule,
- évaluation d'au moins un seuil d'autonomie critique en énergie,
- confrontation de la valeur de réserve en énergie et du au moins un seuil d'autonomie critique de sorte à en déduire un signal de consigne pour commander ledit organe,

le procédé étant caractérisé par le fait que le signal de consigne est utilisé pour commander un projecteur de lumière, la consommation électrique de projecteur pouvant être modifiée dans une gamme de puissance assez large, par exemple une gamme de puissance allant de 12W, pour un feu de croisement pour circulation en ville, à 25W, pour un feu de croisement pour circulation en campagne.

Le fonctionnement du projecteur peut ainsi être adapté selon des objectifs de distance à parcourir et de consommation d'énergie nécessaire en vue d'atteindre un point géographique cible.

Grâce à cette disposition, dans toutes les situations le permettant, la consommation du véhicule est adaptée avec l'objectif que l'autonomie du véhicule en énergie soit suffisante pour atteindre une destination correspondant à un seuil d'autonomie critique.

Le procédé peut comprendre l'étape d'utiliser signal de consigne pour commander l'organe.

Suivant un mode de réalisation, la détermination d'une valeur de réserve en énergie du véhicule comporte une mesure de l'énergie stockée dans au moins une batterie électrique. L'invention est ainsi bien adaptée aux véhicules à motorisation électrique. La détermination d'une valeur de réserve en énergie du véhicule peut en outre ou alternativement au cas précédent comporter une mesure d'un volume de carburant et une conversion du volume de carburant en quantité d'énergie. On peut ainsi proposer l'invention pour des véhicules à moteur thermique ou hybrides.

Le procédé selon l'invention pourra en outre présenter, de manière facultative, au moins l'une quelconque des caractéristiques suivantes :

- l'étape de confrontation comprend une comparaison entre la valeur de réserve en énergie et un seuil d'autonomie critique configurée pour générer en sortie un signal de consigne lorsque que la valeur de réserve en énergie électrique est inférieure au seuil d'autonomie critique. La confrontation par comparaison de niveau des deux entrées d'information est une solution calculatoire facile à mettre en oeuvre dans un système embarqué.
- l'étape d'évaluation comprend l'évaluation de plusieurs seuils d'autonomie critique en énergie et l'étape de confrontation comprend plusieurs comparaisons chacune entre la valeur de réserve en énergie et un seuil, différent, d'autonomie critique et générant en sortie chacune un signal de consigne lorsque que la valeur de réserve en énergie est inférieure au seuil d'autonomie critique Cela permet de raffiner la méthode avec plusieurs consignes chacune correspondant à un seuil d'autonomie reflétant une situation particulière du véhicule (telle la distance le séparant d'une station service, d'une destination saisie dans un système de navigation, une conduite de nuit dans laquelle une panne serait plus gênante que le jour...).

- chaque comparaison a un niveau de priorité, de sorte que, lorsque plusieurs signaux de commande sont générés, soit utilisé pour commander l'organe du véhicule le signal de consigne généré par la comparaison de plus haut niveau de priorité. Au regard des quelques exemples, données au paragraphe précédent, de situations reflétées par les seuils, on comprend qu'il est avantageux de hiérarchiser les seuils critiques de sorte à fournir la consigne de commande la mieux adaptée.

- L'étape d'évaluation comporte, pour l'évaluation d'un seuil :

   * la définition d'un point géographique à atteindre ;
   * la prévision de la quantité d'énergie nécessaire pour atteindre le point géographique. Cette étape d'évaluation utilise avantageusement des données issues d'un système de navigation avec géo-localisation et des données historiques de fonctionnement du véhicule.

Selon un mode de réalisation plus avantageux, cette gamme de puissance s'étend de 5W, pour un feu de croisement pour circulation en ville, à 50W, pour un feu de croisement pour circulation en campagne.

- on opère la définition d'un flux lumineux souhaité en fonction d'un niveau de puissance de consigne défini par le signal de consigne et, avantageusement, on commande le projecteur de manière à produire le flux lumineux souhaité si le flux lumineux souhaité est supérieur à un flux minimum prédéfini et on commande le projecteur de manière à ne pas modifier sa commande pour ne pas modifier le flux lumineux si le flux lumineux souhaité est inférieur au flux minimum prédéfini. Des règles de sécurité en matière de minima d'éclairage et de signalisation sont donc préservées.
- les étapes de détermination, d'évaluation et de confrontation sont effectuées avec une fréquence prédéfinie. On réajuste ainsi périodiquement la commande de l'organe, selon l'évolution de la situation réelle du véhicule.

D'autres caractéristiques, buts et avantages de la présente invention apparaîtront à la lecture de la description détaillée qui va suivre, et en regard des dessins annexés, donnés à titre d'exemples non limitatifs et sur lesquels

La figure 1 illustre divers composants en interaction.

La figure 2 montre le commande d'un organe constitué par un projecteur de véhicule selon l'invention.

La figure 3 montre, pour une LED blanche, l'évolution du courant dans la LED en fonction de la tension directe à une température donnée, de 25°C dans l'exemple.

La figure 4 montre, pour une LED blanche, l'évolution de la tension directe en fonction de la température, à une valeur de courant donnée, de 350 mA dans l'exemple.

La figure 5 montre l'évolution du flux lumineux, pour une LED blanche, en fonction du courant de la LED à une température donnée, de 25 °C dans l'exemple.

La figure 6 montre l'évolution, pour une LED blanche, du flux lumineux en fonction de la température à une valeur de courrant donnée, de 350 mA dans l'exemple.

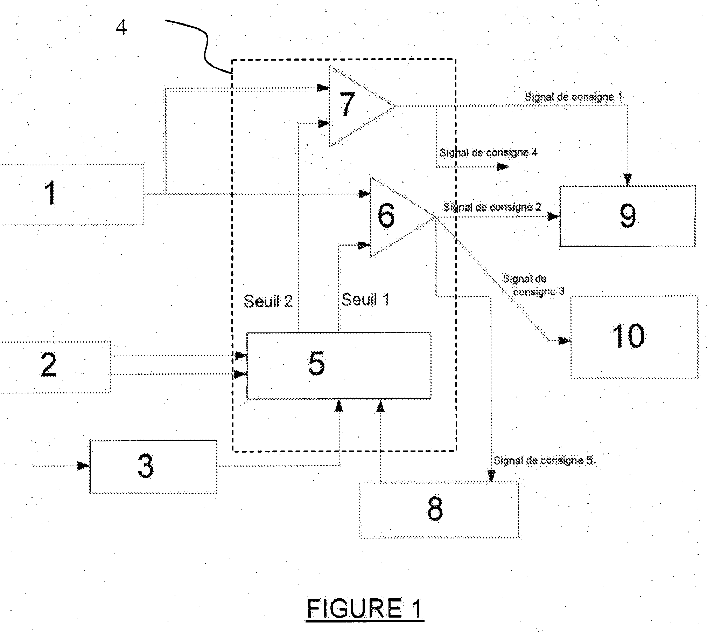

Le procédé de l'invention peut être mis en oeuvre par un dispositif de commande. Un exemple de dispositif est apparent en figure 1. Les parties composant le dispositif peuvent être dédiées à l'invention ou être des éléments partagés avec d'autres fonctionnalités du véhicule. Ainsi différents traitements peuvent être effectués par un microcontrôleur préexistant dans le véhicule Un autre exemple est que la mesure de valeurs de réserve d'énergie peut employer des moyens de mesure déjà présents dans le véhicule, tels une jauge de carburant ou un appareil de mesure de niveau de charge de batteries.

Revenant à la figure 1, on a représenté divers composants ci-après détaillés.

L'ensemble référencé 4 à cette figure correspond à des moyens de traitement aptes à réaliser certaines phases du procédé de l'invention Les moyens de traitement 4 sont en liaison avec différents composants. D'une part, les moyens de traitement 4 reçoivent des informations d'une pluralité de sources. L'une d'entre elles correspond au bloc 1 relatif à des moyens de mesure. Suivant une possibilité, ces moyens de mesure sont des moyens de mesure de l'énergie électrique stockée dans au moins une batterie du véhicule. Ce cas est adapté aux véhicules entièrement électriques et aux véhicules hybrides. Les moyens de mesure 1 peuvent également comprendre une jauge de carburant et des moyens de conversion du volume de carburant en quantité d'énergie. On peut ainsi par exemple additionner les réserves d'énergie correspondant à des batteries et à un volume de carburant en effectuant une conversion permettant de rapprocher la quantité de carburant d'une quantité d'énergie électrique correspondante. On donne ci-après un exemple d'une formule de conversion permettant de passer d'un tel volume de carburant à une énergie. L'énergie potentielle chimique d'un litre d'essence est de. l'ordre de $3,4.10^7$ J. Compte tenu des rendements relatifs d'un moteur thermique et d'un moteur électrique, environ 35% et 80%, on peut convertir l'énergie potentielle d'un litre d'essence utilisé par un moteur thermique de véhicule en $1,5.10^7$ J délivrés par une batterie à un moteur électrique automobile. Les moyens de mesure 1 permettent de délivrer, en sortie, une valeur de réserve en énergie du véhicule.

Cette valeur de réserve peut être injectée en entrée des moyens de traitement 4.

Selon l'invention, on évalue par ailleurs au moins un seuil d'autonomie critique en énergie Plusieurs seuils peuvent être calculés comme il sera décrit plus loin. Chaque seuil d'autonomie critique correspond à une quantité d'énergie minimale nécessaire à atteindre un objectif géographique donné, essentiellement un point géographique. A cet effet, les moyens de traitement 4 comportent des moyens d'évaluation 5 de ce ou de ces seuils d'autonomie critique. En entrée, dans l'exemple proposé en figure 1, les moyen d'évaluation 5 reçoivent des informations données par un système de navigation avec géo-localisation du type GPS (Global Positioning System). Le système de navigation permet d'une part de fournir des informations statiques relatives à l'itinéraire emprunté par le véhicule. Il peut s'agir du type de route, des dénivelés, de la qualité de la route, etc. D'autre part, le système de navigation 2 peut procurer des informations relatives au contexte dynamique de circulation telles que la présence d'embouteillages. Enfin, le système de navigation avec géo-localisation permet de situer le véhicule relativement à différents points géographiques. Ces points peuvent être notamment :

- une destination,
- l'emplacement d'une station-service,
- la situation de la prochaine agglomération.

La définition d'un tel point géographique à atteindre permettra de déterminer la quantité d'énergie nécessaire pour atteindre le point géographique. Ces étapes, que peuvent opérer les moyens d'évaluation, utilisent par ailleurs des informations de consommation du véhicule. Une estimation de la consommation future est effectuée en particulier au moyen des données historiques présentes dans les moyens de stockage 3.

Il peut s'agir d'informations de vitesse, de consommations moyenne et instantanée passées. Ces données historiques sont exploitées pour déterminer la consommation future probable en énergie du véhicule

Cette consommation est rapprochée de la distance séparant l'emplacement actuel du véhicule et le point géographique à atteindre et du type d'itinéraire, pour évaluer le seuil d'autonomie critique correspondant au point géographique en question.

Dans le cas où plusieurs seuils sont calculés, des méthodes d'évaluation similaires peuvent être utilisées pour chacun de ces seuils.

Cette évaluation opérée, on peut confronter les données de seuil déterminées avec les données de réserve d'énergie obtenues depuis les moyens de mesure 1.

Pour ce faire, les moyens de traitement 4 comportent en outre des moyens de confrontation de ces valeurs représentées en figure 1 sous forme de comparateurs 6, 7. Avantageusement, on forme autant de comparateurs que de seuils d'autonomie critique à traiter.

Les comparateurs 6, 7 permettent chacun de traiter un seuil, ici respectivement seuil 1, seuil 2. La donnée de seuil est ainsi injectée sur l'une des entrées du comparateur 6 ou 7, la valeur de réserve en énergie du véhicule est injectée à l'autre entrée.

D'autres solutions peuvent être mise en oeuvre. Notamment, en calculant si la valeur de réserve en énergie est inférieure à une certaine proportion du seuil d'autonomie critique.

Dans la figure 1, on comprend aisément que lorsque la valeur de réserve en énergie devient inférieure au seuil 1, le comparateur 6 est déclenché de sorte à produire un signal de consigne 2. De même, lorsque la valeur de réserve en énergie devient inférieure au seuil 2, le comparateur 7 est déclenché de sorte à générer un signal de consigne 1.

Plusieurs signaux de consigne peuvent être générés au moyen d'un même comparateur, notamment pour commander divers organes du véhicule. Ainsi, le comparateur 6 de la figure 1 délivre un signal de consigne 2 ainsi qu'un signal de consigne 3, chacun en direction d'organes différents repérés 9, 10 et un signal de consigne 5 en direction du conducteur représenté par le bloc 8. De même, le comparateur 7 est ici configuré pour délivrer un signal de consigne 1 en direction d'un organe 9 et un signal de consigne 4.

En cas de pluralité de seuils pour un même organe, il est préféré d'affecter un niveau de priorité à chacun des comparateurs 6, 7. Le niveau de priorité est prédéfini et est avantageusement fonction du niveau de caractère critique que représente le seuil d'autonomie critique auquel correspond le comparateur. A titre d'exemple, on peut affecter un niveau de priorité supérieur à un seuil d'autonomie critique correspondant à la distance jusqu'à une prochaine station-service relativement à un seuil d'autonomie critique correspondant à la distance jusqu'à une destination saisie dans le navigateur.

De par ces niveaux de priorité, on peut déterminer, en sortie des comparateurs 6, 7, quel signal de consigne est à exploiter pour la commande d'un organe.

Les organes en question peuvent être de tout type et principalement du type permettant dé faire varier la consommation en énergie de sorte à modifier l'autonomie du véhicule suivant les besoins.

Le bloc 9 de la figure 1 représente un dispositif de pilotage d'un projecteur constitué d'une source comprenant une pluralité de diodes électroluminescentes (LED) comprenant de manière conventionnelle un microcontrôleur calculant une fonction de commande commandant un oscillateur 11 lui-même contrôlant un hacheur en entrée d'alimentation des LED.

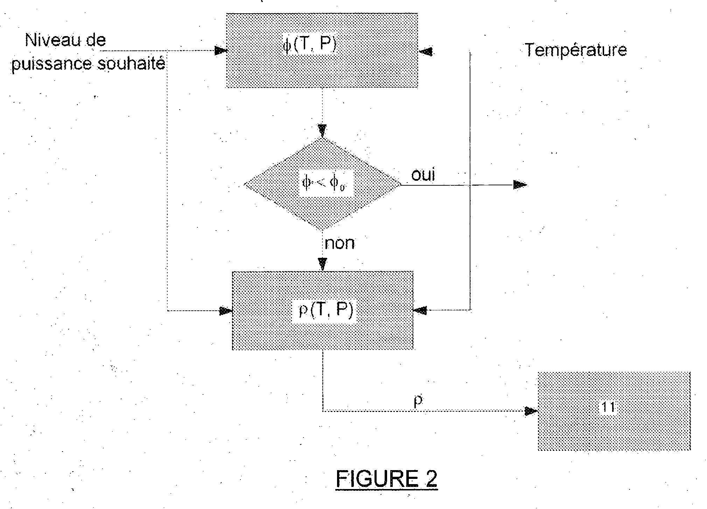

La génération de la commande de projecteurs fait l'objet de l'invention en référence à la figure 2 plus tard dans la description.

Un autre type d'organe commandé ne faisant pas partie de l'invention peut être un dispositif de régulation de vitesse 10, actuellement utilisé pour réguler la vitesse d'un véhicule suivant une valeur de consigne. La valeur de vitesse est généralement fixée par le conducteur. Selon l'invention, on peut influer sur la vitesse de consigne notamment pour abaisser celle-ci de sorte à limiter la consommation induite par les moyens moteur du véhicule

La commande injectée au niveau du dispositif de régulateur de vitesse 10 peut être une consigne indiquant d'abaisser la vitesse en une certaine proportion ou à un certain niveau

A noter qu'un autre type d'organe que peut commander l'invention et un moyen de signalisation d'alerte en direction du conducteur. Ainsi, un organe de signalisation sous forme d'afficheur peut être commandé par un signal de consigne 5 en direction du conducteur 8 de sorte à lui indiquer un niveau d'alerte. Plusieurs niveaux d'alerte peuvent être produits, chacun par un signal de consigne déclenché par un seuil d'autonomie critique différent.

La figure 1 montre que le conducteur 8 peut suivant l'alerte produite, adapter lui-même les réglages du véhicule ou son comportement routier.

La figure 2 montre plus particulièrement la génération d'une commande de projecteur à LED à partir d'un signal de consigne.

Ainsi, un niveau dé puissance souhaité est utilisé et défini par un signal de consigne, (les signaux de consigne 1 et 2).

Un flux lumineux correspondant au niveau de puissance souhaité en fonction de la température du panneau de LED est calculé. La fonction $\phi$ (T, P) indiquée à la figure 2 permet de déterminer un flux lumineux souhaité. A titre d'exemple, cette détermination peut être effectuée à l'aide d'abaques et/ou par le biais d'un algorithme :

Dans l'exemple qui suit, on utilise les notations suivantes :

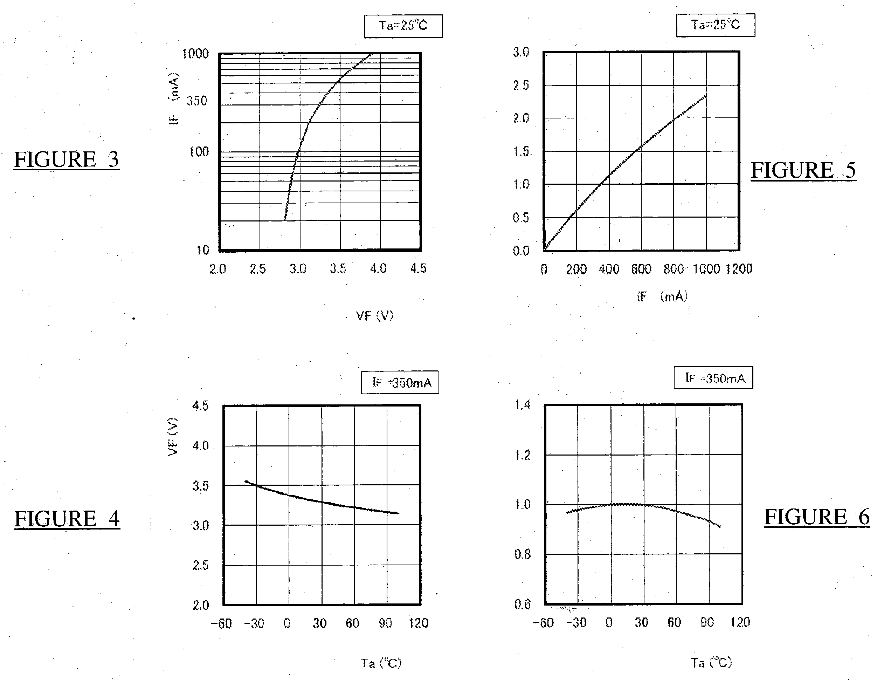

P : Puissance consommée par la LED
$V_f$ : tension directe
$I_f$ : courant dans la LED (direct)
$T_a$ : température ambiante
$T_{a0}$ : température ambiante utilisée par le fabricant pour établir les courbes $V_f$ ($I_f$) et $V_f$ ($T_a$) données dans la figure 3 par exemple
$I_{f0}$ : courant choisi par le fabricant pour établir la courbe $V_f$ ($T_a$) donnée dans la figure 4 par exemple.

Dans le cas des figures fournies, $I_{f0}$ = 350 mA et $T_{a0}$ = 25°C.

$$P = V_f\big(I_f, T_a\big)\cdot I_f \approx V_f\big(I_f, T_{a0}\big)\cdot \frac{V_f\big(T_a, I_{f0}\big)}{V_f\big(T_{a0}, I_{f0}\big)}\cdot I_f = p\big(I_f, T_a\big),$$

d'où $I_f = p^{-1}_{(T_a)}(P)$ (1) où les termes $V_f(I_f, T_{a0})$ et $\dfrac{V_f\big(T_a, I_{f0}\big)}{V_f\big(T_{a0}, I_{f0}\big)}$ sont des fonctions connues données par les constructeurs de LEDs. Par exemple, la figure 3 donne la valeur du courrant dans la LED (courant direct) $I_f$ en fonction de la température directe $V_f$ avec $T_a$ = $T_{a0}$ = 25°C (valeur utilisée par le constructeur pour établir ses spécifications techniques).

La figure 4 donne la valeur de $V_f$ à $I_f$ = 350 mA, en fonction de la température ambiante $T_a$.

Cet exemple est donné pour une LED blanche du marché et n'est bien entendu pas limitatif.

En outre,

$$\phi = \phi\big(I_f, T_a\big) \approx \phi\big(I_f, T_{a0}\big)\frac{\phi\big(I_{f0}, T_a\big)}{\phi\big(I_{f0}, T_{a0}\big)}\ (2)$$

où les deux termes du produit sont également connus et donnés par les fabricants des sources de lumière.

Les figures 5 et 6 donnent un exemple des données fournies par les fabricants à ce sujet. La figure 5 est à $T_a$ = $T_{a0}$ = 25°C et montre le flux lumineux relatif en fonction du courant $I_f$.

Le flux lumineux relatif est aussi illustré en figure 6 à $I_f$ fixé à 350 mA et selon la température ambiante $T_a$.

Grâce aux formules (1) et (2), on obtient la valeur de $\phi$ correspondant au flux souhaité.

Le flux souhaité est alors comparé à une valeur minimum $\phi_0$ correspondant à un seuil minimum nécessaire à la sécurité.

Si le flux lumineux souhaité est inférieur au flux minimum, la commande du projecteur est maintenue en l'état. Sinon, on utilise le flux lumineux souhaité pour réaliser la commande du projecteur, dans le cas représenté sous forme d'un rapport cyclique $\rho$ (P, T) d'un oscillateur 11 commandant un hacheur d'alimentation des LED.

On notera que cet exemple n'est pas limitatif et, notamment, qu'il peut y avoir plusieurs hacheurs connectés à des groupes de LED différents. Par ailleurs, la commande en rapport cyclique peut être remplacée ou complémentée dans les systèmes comportant plusieurs sources lumineuses sous forme de LED. On peut ainsi remplacer la modification du rapport cyclique par la modification de commandes binaires définissant l'allumage ou l'extinction de certaines LED ou de certains groupes de LED.

Le procédé de l'invention s'effectue avantageusement en temps réel, suivant une fréquence prédéfinie, de sorte que la commande du ou des organes est fréquemment réévaluée, permettant de prendre en compte des variations de contexte extérieures au véhicule qu'il serait difficile de prévoir.

## Revendications

1. Procédé de commande d'au moins un organe (8, 10) d'un véhicule automobile pourvu de moyens de stockage d'énergie le procédé comportant les étapes suivantes:

   - détermination d'une valeur de réserve en énergie du véhicule,
   - évaluation d'au moins un seuil d'autonomie critique en énergie,
   - confrontation de la valeur de réserve en énergie et du au moins un seuil d'autonomie critique de sorte à en déduire un signal de consigne pour commander ledit organe (9, 10),

   le procédé étant **caractérisé par le fait que** le signal de consigne est utilisé pour commander un projecteur de lumière (9), la consommation électrique de projecteur pouvant être modifiée dans une gamme de puissance assez large, par exemple une gamme de puissance allant de 12W, pour un feu de croisement pour circulation en ville, à 25W, pour un feu de croisement pour circulation en campagne.

2. Procédé selon la revendication précédente dans lequel la détermination d'une valeur de réserve en énergie du véhicule comporte une mesure de l'énergie stockée dans au moins une batterie électrique.

3. Procédé selon l'une des revendications précédentes dans lequel la détermination d'une valeur de réserve en énergie du véhicule comporte une mesure d'un volume de carburant et une conversion du volume de carburant en quantité d'énergie.

4. Procédé selon l'une des revendications précédentes dans lequel l'étape de confrontation comprend une comparaison entre la valeur de réserve en énergie et un seuil d'autonomie critique configurée pour générer en sortie un signal de consigne lorsque que la valeur de réserve en énergie est inférieure au seuil d'autonomie critique.

5. Procédé selon la revendication précédente dans lequel l'étape d'évaluation comprend l'évaluation de plusieurs seuils d'autonomie critique en énergie et dans lequel l'étapes de confrontation comprend plusieurs comparaisons chacune entre la valeur de réserve en énergie et un seuil, différent, d'autonomie critique et générant en sortie chacune un signal de consigne lorsque que la valeur de réserve en énergie est inférieure au seuil d'autonomie critique.

6. Procédé selon la revendication précédente dans lequel chaque comparaison a un niveau de priorité, de sorte que, lorsque plusieurs signaux de commande sont générés, soit délivré à l'organe (9, 10) du véhicule le signal de consigne généré par la comparaison de plus haut niveau de priorité.

7. Procédé selon l'une des revendications précédentes dans lequel l'étape d'évaluation comporte, pour l'évaluation d'un seuil ;

   - la définition d'un point géographique à atteindre ;
   - la prévision de la quantité d'énergie nécessaire pour atteindre le point géographique,

8. Procédé selon la revendication précédente dans lequel l'étape d'évaluation utilise des données Issues d'un système de navigation (2) avec géo-localisation et des données historiques de fonctionnement du véhicule

9. Procédé selon l'une quelconque des revendications précédentes comportant la définition d'un flux lumineux souhaité en fonction d'un niveau de puissance de consigne défini par le signal de consigne.

10. Procédé selon la revendication précédente comprenant la commande du projecteur (9) de sorte à produire le flux lumineux souhaité si le flux lumineux souhaité est supérieur à un flux minimum prédéfini et l'absence de modification de la commande du projecteur (9) si le flux lumineux souhaité est inférieur au flux minimum prédéfini.

11. Procédé selon l'une des revendications précédentes dans lequel les étapes de détermination, d'évaluation et de confrontation sont effectuées suivant une période prédéfinie.

**Patentansprüche**

1. Verfahren zum Steuern wenigstens eines Organs (9, 10) eines mit Mitteln zum Speichern von Energie versehenen Kraftfahrzeugs, wobei das Verfahren die folgenden Schritte umfasst:

   - Ermitteln eines Fahrzeugenergiereservewertes,
   - Auswerten wenigstens eines kritischen Energiereichweiteschwellenwertes,
   - Gegenüberstellen des Energiereservewertes und des wenigstens einen kritischen Reichweiteschwellenwertes in der Weise, dass daraus ein Sollsignal zum Steuern des Organs (9, 10) abgeleitet werden kann,

   wobei das Verfahren **dadurch gekennzeichnet ist, dass** das Sollsignal zum Steuern eines Scheinwerfers (9) genutzt wird, wobei der Scheinwerferenergieverbrauch in einem ziemlich breiten Leistungsbereich veränderbar ist, zum Beispiel in einem Leistungsbereich von 12 W für ein Abblendlicht innerhalb geschlossener Ortschaften bis 25 W für ein Abblendlicht außerhalb geschlossener Ortschaften.

2. Verfahren nach dem vorhergehenden Anspruch, bei dem das Ermitteln eines Fahrzeugenergiereservewertes ein Messen der gespeicherten Energie in wenigstens einer elektrischen Batterie umfasst.

3. Verfahren nach einem der vorhergehenden Ansprüche, bei dem das Ermitteln eines Fahrzeugenergiereservewertes ein Messen einer Kraftstoffmenge und ein Umrechnen der Kraftstoffmenge in eine Energiemenge umfasst.

4. Verfahren nach einem der vorhergehenden Ansprüche, bei dem das Gegenüberstellen einen Vergleich zwischen dem Energiereservewert und einem kritischen Reichweiteschwellenwert umfasst, der dazu ausgebildet ist, als Ausgabe ein Sollsignal zu erzeugen, wenn der Energiereservewert unter dem kritischen Reichweiteschwellenwert liegt.

5. Verfahren nach dem vorhergehenden Anspruch, bei dem das Auswerten die Auswertung mehrerer kritischer Energiereichweiteschwellenwerte umfasst, und bei dem das Gegenüberstellen jeweils mehrere Vergleiche zwischen dem Energiereservewert und einem anderen kritischen Reichweiteschwellenwert umfasst, die jeweils als Ausgabe ein Sollsignal erzeugen, wenn der Energiereservewert unter dem kritischen Reichweiteschwellenwert liegt.

6. Verfahren nach dem vorhergehenden Anspruch, bei dem jedem Vergleich eine Prioritätsebene zukommt, so dass beim Erzeugen mehrerer Steuersignale an das Organ (9, 10) des Fahrzeugs das im Vergleich mit höchster Prioritätsebene erzeugte Sollsignal abgegeben wird.

7. Verfahren nach einem der vorhergehenden Ansprüche, bei dem zur Auswertung eines Schwellenwertes das Auswerten umfasst:

   - Bestimmen eines zu erreichenden geografischen Punktes;
   - Vorhersagen der erforderlichen Energiemenge zum Erreichen des geografischen Punktes.

**8.** Verfahren nach dem vorhergehenden Anspruch,
bei dem Daten aus einem Navigationssystem (2) mit Geolokalisation und historische Betriebsdaten des Fahrzeugs zum Auswerten herangezogen werden.

**9.** Verfahren nach einem der vorhergehenden Ansprüche,
umfassend das Bestimmen eines gewünschten Lichtstroms in Abhängigkeit eines durch das Sollsignal bestimmten Soll-Leistungsniveaus.

**10.** Verfahren nach dem vorhergehenden Anspruch,
umfassend die Steuerung des Scheinwerfers (9) solchermaßen, dass der gewünschte Lichtstrom erzeugt wird, wenn der gewünschte Lichtstrom über einem vorbestimmten Mindeststrom liegt, und keine Änderung in der Steuerung des Scheinwerfers (9) vorgenommen wird, wenn der gewünschte Lichtstrom unter dem vorbestimmten Mindeststrom liegt.

**11.** Verfahren nach einem der vorhergehenden Ansprüche,
bei dem die Schritte Ermitteln, Auswerten und Gegenüberstellen in einem vorbestimmten Zeitraum erfolgen.

## Claims

**1.** Method for controlling at least one component (9, 10) of a motor vehicle provided with energy storage means, the method comprising the following steps:

- determining an energy reserve value of the vehicle,
- evaluating at least one critical energy autonomy threshold,
- comparing the energy reserve value and the at least one critical autonomy threshold so as to derive from this an instruction signal for controlling said component (9, 10), the method being **characterised by** the fact that the instruction signal is used for controlling a headlight (9), the electrical consumption of the headlight being able to be modified in a fairly wide power range, for example a power range ranging from 12 W for a dipped headlight for travelling in town to 25 W for a dipped headlight for travelling in the country.

**2.** Method according to the preceding claim, in which the determination of an energy reserve value for the vehicle comprises a measurement of the energy stored in at least one electrical battery.

**3.** Method according to either of the preceding claims, in which the determination of an energy reserve value for the vehicle comprises a measurement of the volume of fuel and a conversion of the volume of fuel into a quantity of energy.

**4.** Method according to any of the preceding claims, in which the comparison step comprises a comparison between the energy reserve value and a critical autonomy threshold configured so as to generate as an output an instruction signal when the energy reserve value is below the critical autonomy threshold.

**5.** Method according to the preceding claim, in which the evaluation step comprises the evaluation of a plurality of critical energy autonomy thresholds and in which the comparison steps comprise a plurality of comparisons each between the energy reserve value and a different critical autonomy threshold and generating as an output an instruction signal when the energy reserve value is below the critical autonomy threshold.

**6.** Method according to the preceding claim, in which each comparison has a priority level so that, when a plurality of control signals are generated, the instruction signal generated by the comparison with the highest priority level is delivered to the component (9, 10) of the vehicle.

**7.** Method according to any of the preceding claims, in which the evaluation step comprises, for the evaluation of a threshold:

- the definition of a geographical point to be reached;
- the prediction of the quantity of energy necessary for reaching the geographical point.

**8.** Method according to the preceding claim, in which the evaluation step uses data issuing from a navigation system (2) with geolocation and historical data on the functioning of the vehicle.

9. Method according to any of the preceding claims, comprising the definition of a required light flow according to a set power level defined by the instruction signal.

10. Method according to the preceding claim, comprising the control of the headlight (9) so as to produce the required light flow if the required light flow is greater than a predefined minimum flow and the absence of any change in the control of the headlight (9) if the required light flow is below the predefined minimum flow.

11. Method according to any of the preceding claims, in which the determination, evaluation and comparison steps are carried out in accordance with a predefined period.

FIGURE 1

FIGURE 2

EP 2 412 580 B1

FIGURE 5

FIGURE 6

FIGURE 3

FIGURE 4

12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102004021998